# EUROPEAN PATENT SPECIFICATION

(11) **EP 0 429 262 B1**
(45) Date of publication and mention of the grant of the patent: **18.09.1996**
(21) Application number: 90312502.9
(22) Date of filing: 16.11.1990
(51) Int. Cl.: H04Q 11/04, H04M 11/06, H04L 12/64

(54) **ISDN terminal equipment operating with circuit switching mode and packet switching mode**
ISDN-Endgerät wirksam mit Durchschaltvermittlungsbetrieb und mit Paketvermittlungsbetrieb
Terminal RNIS fonctionnant en mode de commutation en circuit et en mode de commutation en paquets

(30) Priority: 17.11.1989 JP 297676/89
(43) Date of publication of application: 29.05.1991
(73) Proprietor: MATSUSHITA GRAPHIC COMMUNICATION SYSTEMS, INC., Meguro-ku, Tokyo 153 (JP)
(72) Inventor: Hasegawa, Kenichi, Inagi-shi, Tokyo 206 (JP)
(74) Representative: Hitching, Peter Matthew

(56) References cited:
- EP-A- 0 323 083
- DATA COMMUNICATIONS. vol. 16, no. 11, October 1987, NEW YORK US pages 37 - 255; J.I.FALEK ET AL.: 'Standards Makers Cementing ISDN Subnetwork Layers'
- COMPUTER COMMUNICATIONS. vol. 11, no. 4, August 1988, GUILDFORD GB pages 171 - 176; E. PEEL: 'International Extension of ISDN and Terminal Implications'
- EDN ELECTRICAL DESIGN NEWS. vol. 32, no. 2, 22 January 1987, NEWTON, MASSACHUSETTS US pages 167 - 174; T.O'TOOLE: 'ISDN Terminals Simplify Data Transmissions'

## Description

The present invention relates to ISDN (Integrated Services Digital Network) terminal equipment which can operate with either a circuit switched communication system or a packet switched communication system.

For example, there are three types of G4 facsimile terminal equipment which can be connected to an ISDN network: the first type can carry out data communication by a circuit switched mode only, the second type can carry out data communication by a packet switched mode only, and the third type can carry out data communication by either the circuit switched mode (circuit mode) or the packet switched mode (packet mode). However, generally, a caller does not know which type of G4 facsimile terminal equipment is connected to the ISDN network at a receiver.

In conventional G4 facsimile terminal equipment which can carry out data communication by either the circuit switched mode or the packet switched mode, an operator must set the G4 facsimile terminal equipment manually to the circuit switched mode or the packet switched mode when starting data communication (sending facsimile data). When the operator does not know which type of G4 facsimile terminal equipment is connected to the ISDN network at a called party or receiver, the operator first tries data communication by either the circuit switched mode or the packet switched mode, and if the data communication cannot be carried out normally by that mode, the operator tries data communication again by using the other mode. Where the setting and changing of the modes are carried out manually by the operator, bothersome manual operations must be performed by the operator of the calling party in the conventional G4 facsimile terminal equipment. Computer Communications Vol. 11 No. 4, August 1988, Pages 171-176, article by E Peel discloses some speculation on the future of ISDN. Amongst the speculation the possibility is raised of providing a combined G4-G3 facsimile machine which initially attempts to communicate using the G4 specifications. If this is unsuccessful it will automatically retry using G3.

An embodiment of the present invention may provide ISDN (Integrated Services Digital Network) terminal equipment which can operate with either a circuit switched communication system or a packet switched communication system, and which can be operated by simple manual operation even when an operator does not know which type of G4 facsimile terminal equipment is connected to the ISDN network at a called party.

According to the present invention, there is provided ISDN terminal equipment comprising:
a manual starting means;
an unsuccessful try detecting means for detecting that data communication has not been successfully begun by the operation of said manual starting means; and
a retrying means; and
characterised by
a circuit switched communication means operable to carry out data communication in accordance with a circuit-switched procedure,
a packet switched communication means operable to carry out data communication in accordance with a packet switched communication procedure,
wherein either one of the said communication means is predeterminable as a first communication means in response to a manual start input, thereby providing two alternative modes of operation,
the manual starting means is operable to begin the setting up of a call, when receiving said manual start input, using the predetermined first communication means, and
the retrying means is operable to begin the operation of setting up a call using the other of said communication means when said unsuccessful try detecting means detects that the data communication has not been successfully begun by the operation of said manual starting means.

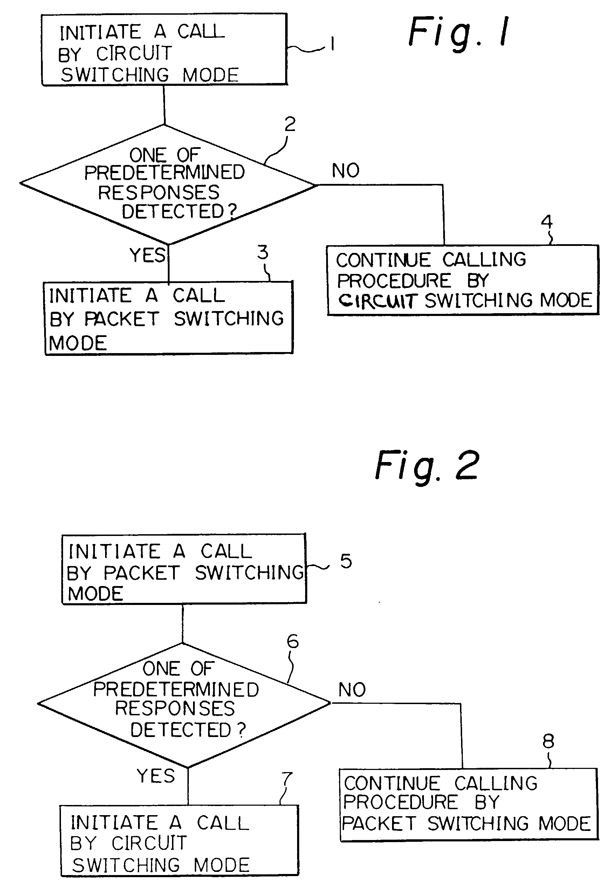

For a better understanding of the invention, and to show how the same may be carried into effect, reference will now be made, purely by way of example to the accompanying drawings in which:-
Figures 1 and 2 each show a basic operation of the present invention;

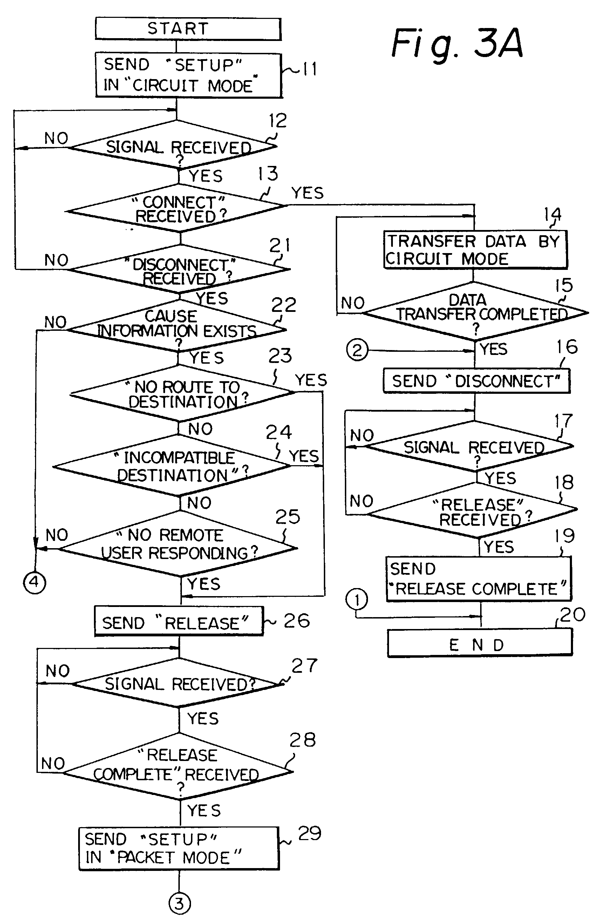

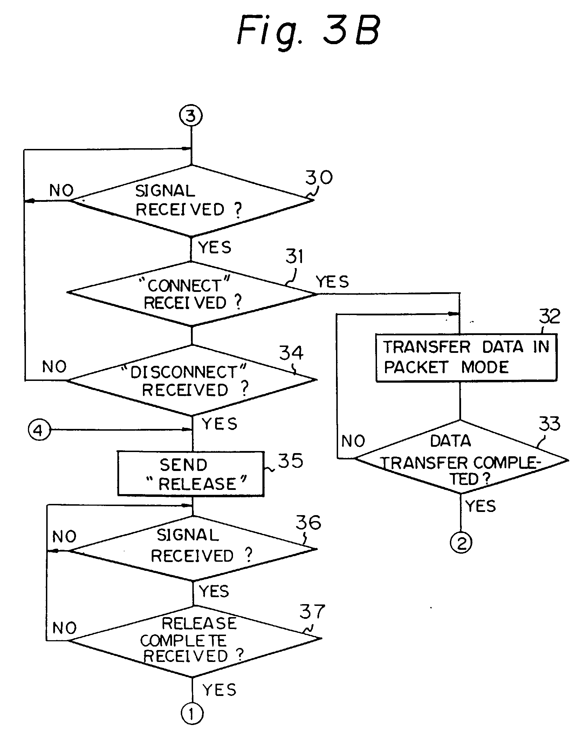

Figures 3A and 3B show the operation of terminal equipment according to a first embodiment of the present invention;

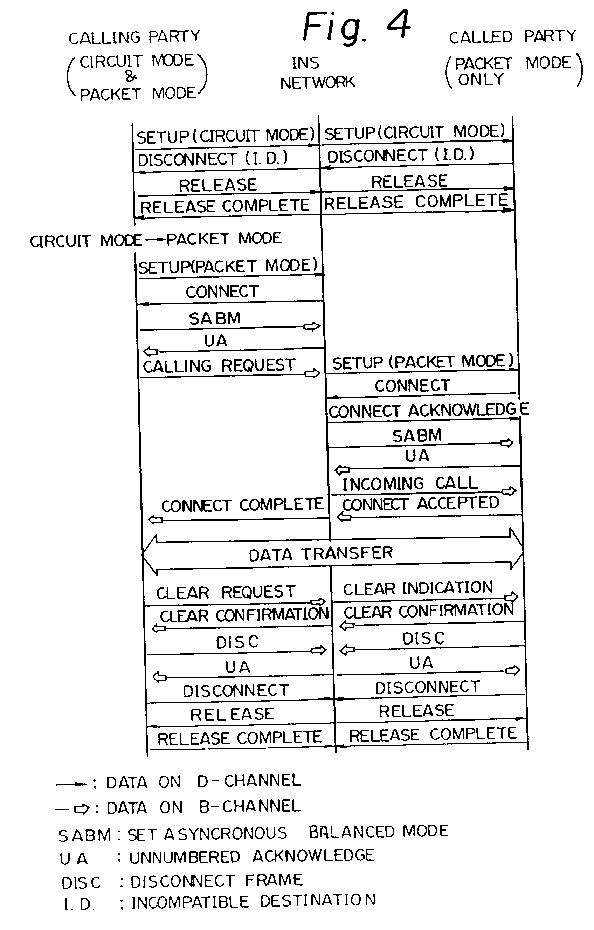

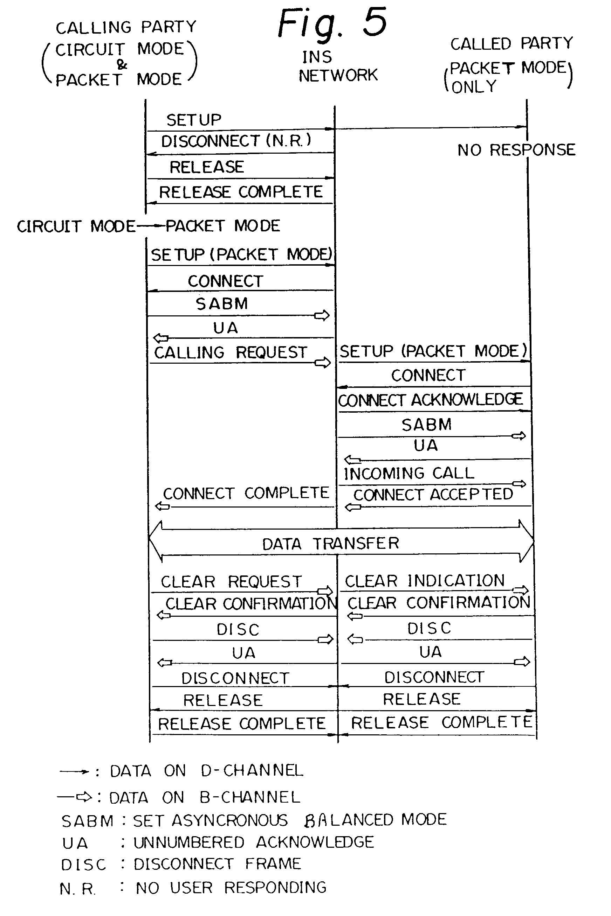

Figures 4 and 5 each show an example message sequence between terminal equipment according to the first embodiment of the present invention and terminal equipment at the called party through the INS network which is the Japanese implementation of ISDN, where both the terminal equipment according to the first embodiment of the present invention and the terminal equipment at the called party are connected to the INS network, the terminal equipment at the called party can operate in accordance with a packet switched communication procedure only, and the terminal equipment according to the first embodiment of the present invention first tries data communication by a circuit switched mode;

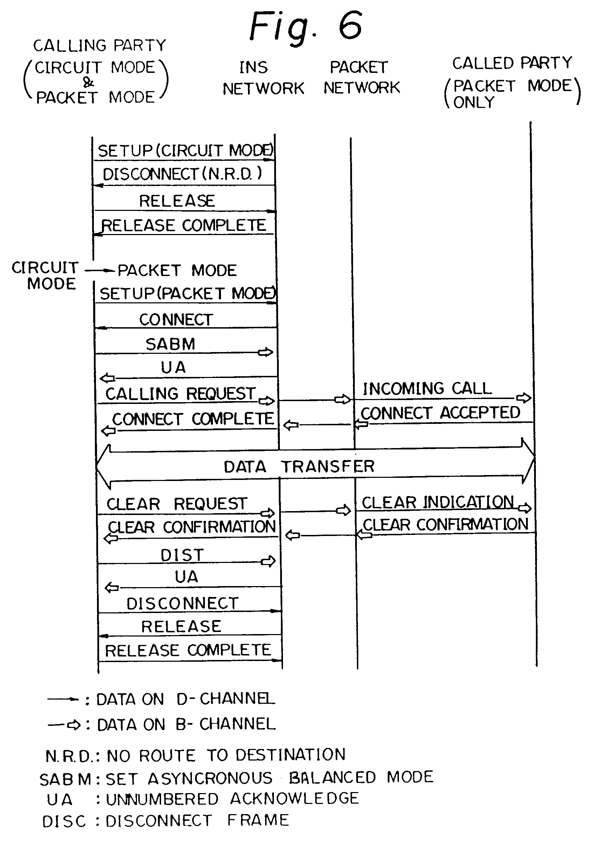

Figure 6 shows an example message sequence between terminal equipment according to the first embodiment of the present invention and terminal equipment at the called party, through the INS network and a packet communication network which is connected to the INS network, where the terminal equipment according to the first embodiment is connected to the INS network, and the terminal equipment at the called party is connected to the packet communication network, and can operate in accordance with a packet switched communication procedure only. In this case the terminal equipment according to the first embodiment of the present invention first tries data communication by a circuit switched mode;

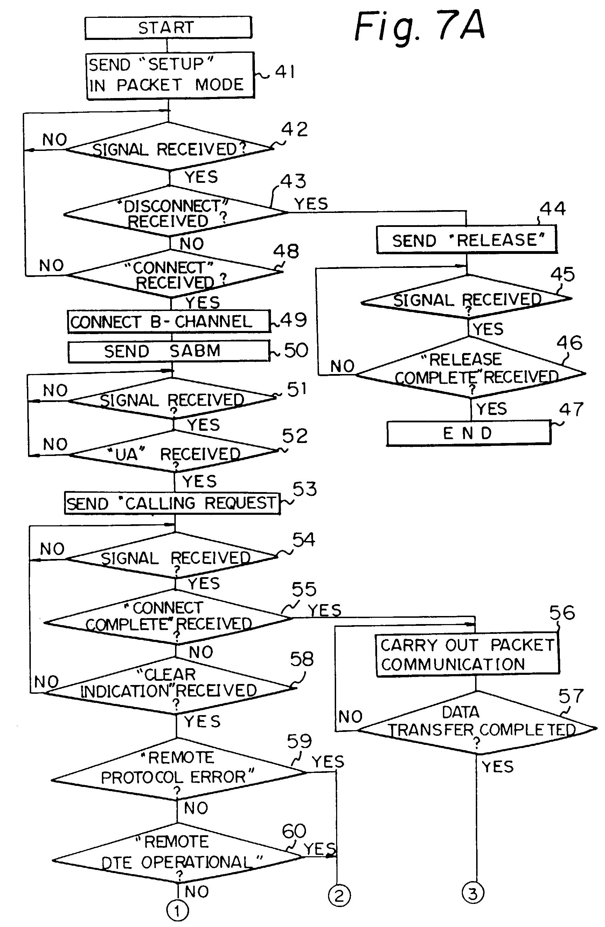

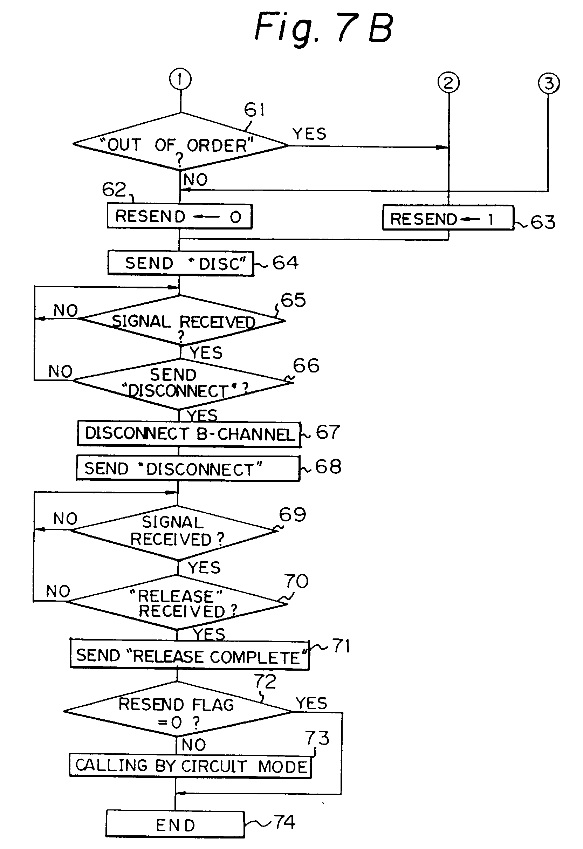

Figures 7A and 7B show an operation of terminal equipment according to a second embodiment of the present invention; and

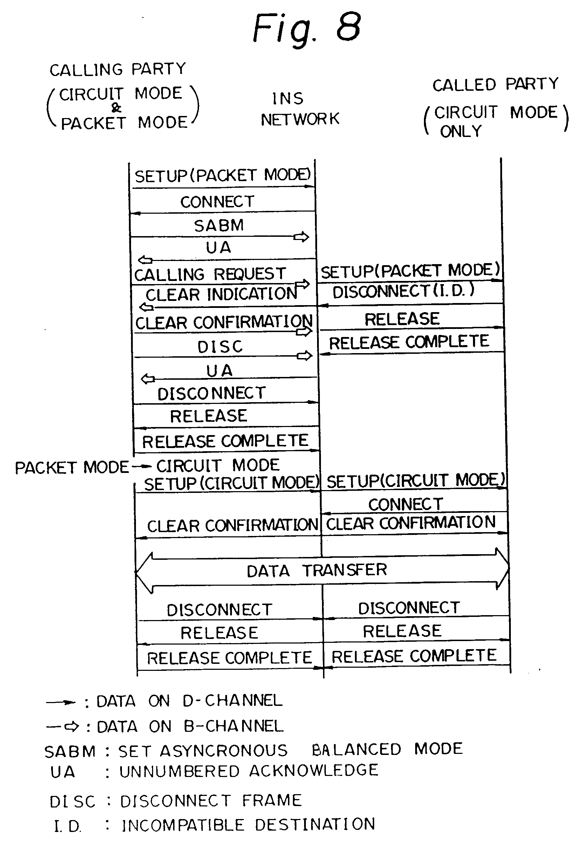

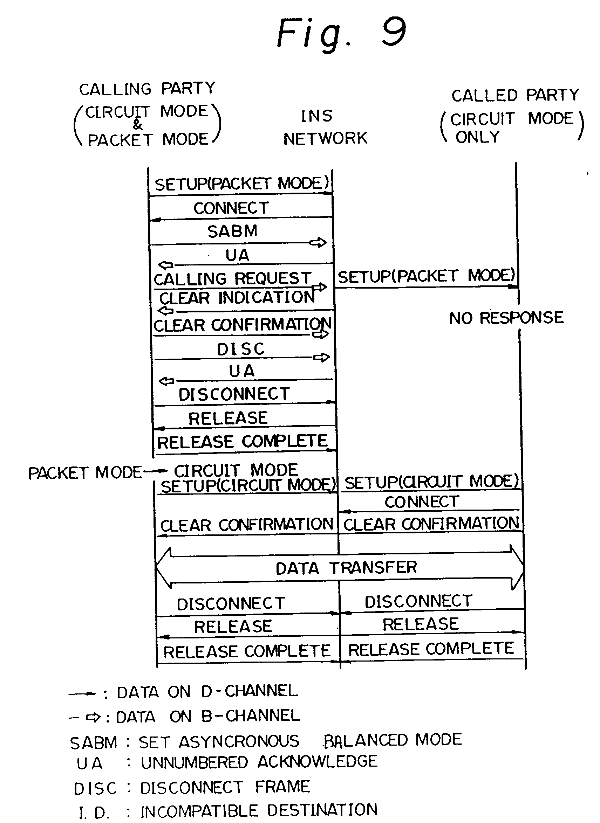

Figures 8 and 9 each show an example message sequence between terminal equipment according to the second embodiment of the present invention and terminal equipment at the called party through the INS network, where both the terminal equipment according to the second embodiment of the present invention and the terminal equipment at the called party are connected to the INS network, the terminal equipment at the called party can operate in accordance with a circuit switched communication procedure only, and the terminal equipment according to the second embodiment of the present invention first tries data communication by a packet switched mode.

### DESCRIPTION OF THE PREFERRED EMBODIMENTS

### (1) Basic Operation of the Present Invention

Before describing the preferred embodiments of the present invention, the basic operations of the various aspects of the present invention are explained below.

Figure 1 shows the operation of the terminal equipment according to the present invention. In the operation of Fig. 1, in the step 1, the terminal equipment at the calling party starts a calling operation by the circuit switched mode, in response to a starting operation by the operator.

Hereinafter, all messages denoted by capital characters are to be read as defined by CCITT recommendation Q. 931, and the ISDN network will be referred to as "the network".

In step 2, it is determined whether or not a predetermined response state of the network is detected.

Once it has been determined that the above predetermined state is detected then, in step 3, the terminal equipment at the caller starts a calling operation by the packet switched mode. In the ISDN network, for example the INS network in Japan, when the terminal equipment at the receiver is not able to carry out data communication by the circuit switched mode, a DISCONNECT message may be returned from the network, where the DISCONNECT message includes a cause information element as defined by the CCITT recommendation Q. 931, and the cause information element may indicate "No Route to Destination", "No User Responding", or "Incompatible Destination". In this case, the above predetermined state is a state of the terminal equipment at the caller, receiving the DISCONNECT message as above.

When it is determined that the above predetermined state is not detected, in step 4 the terminal equipment at the calling party continues the data communication procedure in accordance with the circuit switched mode.

Figure 2 shows the alternative operation of the terminal equipment according to the present invention. In the operation of Fig. 2, first in step 5, the terminal equipment at the calling party sends a SETUP message to the ISDN network by the packet switched mode responding to the starting operation by the operator, then in step 6, it is determined whether or not a predetermined response state of the network is detected.

Once it is determined that the above predetermined state is detected, then in step 7, the terminal equipment at the calling party starts a calling operation by the circuit switched mode. In the ISDN network, for example, the INS network in Japan, when the terminal equipment at the receiver is not able to carry out data communication by the packet switched mode, a Clear Indication packet may be returned from the network, where the Clear Indication packet includes a cause information element as defined by the CCITT recommendation X.25, and the cause information element may indicate "Remote Procedure Error", "Out of Order", or "Remote DTE Operational".

When it is determined that the above predetermined state is not detected then, in step 8, the terminal equipment at the calling party continues the data communication procedure in accordance with the packet switched mode.

As explained above, according to the present invention, when the terminal equipment in the called party does not seem to be in the correct state to carry out data communication by the same communication mode as the mode by which the caller begins a calling procedure, the caller detects the situation, automatically changes the communication mode in response, and retries the calling procedure in accordance with the alternative communication mode. Thus additional manual operations are avoided.

### (2) Operation of the First Embodiment

Figures 3A and 3B show the operation of terminal equipment according to a first embodiment of the present invention, wherein the terminal equipment can operate with either a circuit switched system or a packet switched system. In the first embodiment, the terminal equipment first starts a calling procedure by the circuit switched mode.

In step 11 in Figure 3A, the terminal equipment sends a SETUP message to the network to initiate a call, where the SETUP message includes a bearer capability information element wherein the transfer mode is set to "circuit mode" which corresponds to the above-mentioned circuit switched mode. The "bearer capability information element", the "transfer mode", and the "circuit mode" are defined in the CCITT Q. 931.

Next, when the terminal equipment receives a CONNECT message from the network in steps 12 and 13, the operation proceeds to step 14 to transfer data in accordance with the circuit switched mode. When it has been determined that all the data has been transferred in step 15, the terminal equipment sends a DISCONNECT message to the network in step 16. Then, when the terminal equipment receives a RELEASE message from the network in steps 17 and 18, the operation proceeds to step 19 to transfer a RELEASE COMPLETE message to the network to end the communication.

When the terminal equipment does not receive a CONNECT message from the network in steps 12 and 13, the operation goes to step 21 to determine whether or not a DISCONNECT message is received from the network. Then, it is determined whether or not a cause information element is included in the DISCONNECT message in step 22. When yes is determined in the step 22, it is determined what the cause information element indicates in the steps 23, 24, and 25. In the example of Fig. 3A, the determinations are carried out regarding the cause information elements "No Route to Destination", "Incompatible Destination", are "No User Responding". Although one of the above is sent from the current INS network in Japan when the receiver is not able to carry out data communication by the same mode as the caller (the circuit switched mode), other cause information elements may be included as part of the DISCONNECT message in other ISDN networks, and these may be determined by experiment.

When any of the above cause information elements is not received in steps 23, 24, and 25, or when "no" is determined in step 22, the operation goes to step 35 to send a RELEASE message. Then, when the RELEASE message is received in steps 36 and 37, the operation goes to step 20 to complete the communication.

When one of the above cause information elements is received in steps 23, 24, and 25, the operation goes to step 26 to send a RELEASE message to the network. Then, when a RELEASE message is received in steps 27 and 28, the operation goes to step 29 to retry a calling procedure by the packet switching mode, i.e., the terminal equipment sends a SETUP message which includes a transfer mode element which is set to "packet mode", to the network.

Next, when the terminal equipment receives a CONNECT message from the network in steps 30 and 31, the operation goes to step 32 to transfer data in accordance with the packet switched mode. When it is determined that all the data has been transferred in step 33, the terminal equipment sends a DISCONNECT message to the network in step 16. Then, when the terminal equipment receives a RELEASE message from the network in steps 17 and 18, the operation goes to step 19 to transfer a RELEASE COMPLETE message to the network to complete the communication.

When the terminal equipment does not receive a CONNECT message from the network in steps 30 and 31, the operation goes to step 35 to determine whether or nor a DISCONNECT message is received from the network. Then, when a RELEASE message is received in steps 36 and 37, the operation goes to the step 20 to complete the communication.

Figures 4 and 5 each show an example message sequence between terminal equipment according to the first embodiment of the present invention and terminal equipment at the called party through the INS network, where both the terminal equipment according to the first embodiment of the present invention and the terminal equipment at the called party are connected to the INS network. The terminal equipment at the called party can operate in accordance with a packet switched communication procedure only, and the terminal equipment according to the first embodiment of the present invention, first tries data communication by a circuit switched mode.

In the sequence of Fig. 4, a SETUP message is sent from the terminal equipment at the calling party to the INS network, where the SETUP message includes a transfer mode element which is set to "circuit mode". Receiving the above, the SETUP message is sent to the terminal equipment at the called party. Since the terminal equipment at the called party cannot carry out data communication by the circuit switching mode, the terminal equipment at the called party returns a RELEASE message to the INS network, where the RELEASE message includes a cause information element indicating "Incompatible Destination". Receiving the RELEASE message, the INS network sends a DISCONNECT message to the terminal equipment at the calling party, where the RELEASE message includes a cause information element indicating "Incompatible Destination". Receiving the DISCONNECT message, the terminal equipment at the calling party sends a RELEASE message to the INS network. Receiving the RELEASE message, the INS network sends a RELEASE COMPLETE message to both parties' terminal equipment at the calling party and the terminal equipment at the called party to complete the data communication by the circuit switched mode.

Receiving the above RELEASE COMPLETE message from the INS network, the caller's terminal equipment sends a SETUP message to the INS network, where the SETUP message includes a transfer mode element which is set to "packet mode". Responding to the above, the INS network returns a CONNECT message to the receiver's terminal equipment, and thereby the sender's terminal equipment is allowed to use a B-channel in the INS network. Then, the caller's terminal equipment sends and SABM (Set Asynchronous Balanced Mode) command (the CCITT recommendation X. 25) to the INS network through the B-channel to establish a link between the caller's terminal equipment and the INS network in accordance with the HDLC (High level data link) and LAPB (Link Access Procedure for B-channel) procedure. Responding to the SABM command, the INS network returns a UA response to the terminal equipment at the calling party to acknowledge the receipt and acceptance of the SABM command. Receiving the UA response, the caller's terminal equipment sends a Calling Request packet (X. 25) to the INS network.

Receiving the Calling Request packet, the INS network sends a SETUP message to the receiver's terminal equipment. Since the receiver's terminal equipment is able to carry out data communication by the packet switching mode, the receiving terminal equipment returns a CONNECT message to the INS network. Receiving the CONNECT message, the INS network sends a CONNECT ACKNOWLEDGE message to the receiver. Thus, a B-channel can be used between the receiver and the INS network, and the INS network sends an SABM command to the terminal equipment at the called party through the B-channel. Receiving the SABM command, the terminal equipment at the called party returns a UA response to the INS network. Upon receipt of the UA response from the receiver's terminal equipment, the INS network sends an Incoming Call packet (X. 25) to the receiver's terminal equipment. The said terminal equipment returns the Connect Accepted packet (X. 25) to the INS network, and the INS network sends a Connect Complete packet (X. 25) to the caller's terminal equipment. Thus data transfer can be carried out between the caller's terminal equipment and the receiver's terminal equipment through the INS network.

When the above data transfer is complete, the caller's terminal equipment sends a Clear Request packet (X. 25) to the INS network. Upon receipt of the Clear Request packet, the INS network sends a Clear Indication packet (X. 25) to the receiver's terminal equipment. In response to the Clear Indication packet, the terminal equipment at the called party returns a Clear Confirmation packet (X. 25) to the INS network, and the Clear Confirmation packet is sent to the caller's terminal equipment. Then, both the sender's terminal equipment and the receiver's terminal equipment send a Disconnect frame (DISC) to the INS network, whereupon the INS network returns a UA response signal to both parties' terminal equipment. Thus, control is shifted from the B-channel to the D-channel, and both parties' terminal equipment send a DISCONNECT message to the INS network. Then, the INS network sends a RELEASE message to both parties' terminal equipment, and, responding to the RELEASE message, both sets of terminal equipment return a RELEASE COMPLETE message to the INS network to complete the data communication.

In the sequence of Fig. 5, when the circuit switched mode SETUP signal is sent to a receiver's terminal equipment and the receiver's terminal equipment is unable to carry out circuit switched data communication, the receiver's terminal equipment makes no response. When no response is received from the receiver's terminal equipment for a predetermined time, the INS network sends a DISCONNECT message to the caller's terminal equipment where the DISCONNECT message includes a cause information element of "No user responding". Receiving the DISCONNECT message, the sender's terminal equipment sends a RELEASE message to the INS network. Thereafter, the rest of the sequence is the same as the sequence of Fig. 4.

Figure 6 shows an example message sequence between terminal equipment according to the first embodiment of the present invention and terminal equipment at the called party, through the INS network and a packet communication network which is connected to the INS network, where the terminal equipment according to the first embodiment is connected to the INS network, and the terminal equipment at the called party is connected to the packet communication network, and can operate in accordance with a packet switching communication procedure only, and the terminal equipment according to the first embodiment of the present invention, first tries data communication by a circuit switching mode.

In the sequence of Fig. 6, since the terminal equipment at the receiver is connected to a packet communication network, a SETUP signal is sent from the caller's terminal equipment to the INS network, where the SETUP signal contains a transfer mode element set to "circuit mode". Responding to the above, the INS network returns a DISCONNECT message to the caller's terminal equipment where the RELEASE signal includes the cause information element indicating "No Route to Destination". Receiving the DISCONNECT message, the caller's terminal equipment sends a RELEASE signal to the INS network. In response to the RELEASE signal, the INS network sends a RELEASE COMPLETE signal to the caller's terminal equipment to complete the data communication by the circuit switched mode.

Receiving the above RELEASE COMPLETE signal from the INS network, the caller's terminal equipment sends a SETUP signal to the INS network, where the SETUP signal contains a transfer mode element set to "packet mode". In response, the INS network returns a CONNECT signal to the caller's terminal equipment, and thereby the caller's terminal equipment is able to use a B-channel in the INS network. Then, the caller's terminal equipment sends an SABM command (X. 25) to the INS network through the B-channel to establish a link between the caller's terminal equipment and the INS network in accordance with the HDLC and LAPB procedure, In response to the SABM command, the INS network returns a UA signal to the caller's terminal equipment to acknowledge receipt and acceptance of the SABM command. Upon receipt of the UA signal the terminal equipment at the calling party sends a Calling Request packet (X. 25) to the INS network.

Having received the Calling Request packet, the INS network sends an Incoming Call packet (X. 25) to the receiver's terminal equipment through the packet communication network. The receiver's terminal equipment returns the Connect Accepted packet (X. 25) to the INS network through the packet communication network, and the INS network sends a Connect Complete packet (X. 25) to the terminal equipment at the calling party. Thus, data transfer can be carried out between the terminal equipment at the calling party and the terminal equipment at a called party through the INS network and the packet communication network.

When the above data transfer is complete, the caller's terminal equipment sends a Clear Request packet (X. 25) to the INS network. Upon receipt of the Clear Request packet, the INS network sends a Clear Indication packet (X. 25) to the receiver's terminal equipment through the packet communication network. In response to the Clear Indication packet, the terminal equipment at the called party returns a Clear Confirmation packet (X. 25) to the INS network through the packet communication network, and the Clear Confirmation packet is sent to the caller's terminal equipment. Then, the caller's terminal equipment sends a Disconnect frame (DISC) to the INS network, and then, the INS network returns a UA response signal to the caller's terminal equipment. Thus, control is shifted from the B-channel to the D-channel, and the caller's terminal equipment sends a DISCONNECT signal to the INS network. Then, the INS network returns a RELEASE signal to the caller's terminal equipment, and, responding to the RELEASE signal, the caller's terminal equipment returns a RELEASE COMPLETE signal to the INS network to complete the data communication.

### (3) Operation of the Second Embodiment

Figures 7A and 7B show the operation of the terminal equipment according to a second embodiment of the present invention, wherein the terminal equipment can operate with either a circuit switched system or a packet switched network system. In the second embodiment, the terminal equipment begins any calling procedure in the packet switched mode.

In step 41 in Figure 7A, the terminal equipment sends a SETUP signal to the network to initiate a call, which signal includes a bearer capability information element wherein the transfer mode is set to "packet mode" which corresponds to the aforementioned packet switched mode.

Then, when the terminal equipment receives a DISCONNECT signal from the network in steps 42 and 43, operation proceeds to step 44 to send a RELEASE signal to the INS network. Finally, when a RELEASE COMPLETE signal is received from the INS network in steps 45 and 46, the operation is completed in step 47.

When the terminal equipment receives a CONNECT signal from the network in steps 42 and 48, operation proceeds to step 49 to connect the caller's terminal equipment to a B-channel, and sends an SABM command to the INS network through the B-channel. When a UA response signal is received from the INS network in steps 51 and 52, the caller's terminal equipment sends a Calling Request packet to the INS network in step 53. Then, when a Connect Complete packet is received in steps 54 and 55, the operation proceeds to step 56 to carry out packet communication for transferring data. When data transfer is found to be complete in step 57, a Resend flag is set to zero in step 62. Then, the caller's terminal equipment sends a Disconnect frame to the INS network in step 64. When a UA response is received in steps 65 and 66, the B-channel is disconnected in step 67, and a DISCONNECT signal is sent to the INS network in step 68. When a RELEASE signal is received in steps 69 and 70, a RELEASE COMPLETE signal is sent to the INS network in step 71. Then, when the Resend flag is found to be set to zero in step 72, operation is completed in step 74. Should it be determined that the Resend flag is not set to zero, as in step 72, a calling operation is initiated by the circuit switched mode in the step 73.

When a Clear Indication packet is received in steps 54 to 58, the indication of a cause indication element therein is determined in steps 59,60 and 61. In the example of Fig. 7A, determination is carried out regarding the cause information elements "Remote Procedure Error", "Out of Order", and "Remote DTE operational". Although one of the above is sent as a cause information element with a Clear Indication packet from the current INS network in Japan when the receiver's terminal equipment is unable to carry out data communication in the same mode as the caller's terminal equipment (the packet switched mode), other 5 cause information elements may be included as part of the DISCONNECT signal in other ISDN networks, and these may be determined by experiment. These may include "no route to destination", "no user responding" or "incompatible destination".

When one of the above cause information elements is received in steps 59 to 61, operation proceeds to step 63 to set the Resend flag to one. Then, operation continues to step 64. Operations subsequent to step 64 are the same as explained above, except that the data initiation sequence for the circuit switched mode is carried out in step 73, due to the Reset flag which is equal to one.

When none of the above cause information elements is received in steps 59 to 61, the operation proceeds to step 62 to set the Resend flag to zero, and operation thereafter is the same as explained above, where the data initiation sequence in step 73 is not carried out, due to the Reset flag being set at zero.

Figures 8 and 9 show an example message sequence between terminal equipment according to the second embodiment of the present invention and a receiver's terminal equipment through the INS network, where both the terminal equipment according to the second embodiment of the present invention and the receiver's terminal equipment are connected to the INS network, the receiver's terminal equipment can operate in accordance with a circuit switched communication procedure only, and the terminal equipment according to the second embodiment of the present invention, first tries data communication by a packet switched mode.

In the sequence of Fig. 8, a SETUP signal is sent by the caller's terminal equipment to the INS network. The SETUP message includes a transfer mode element set to "packet mode". In response to the above, the INS network returns a CONNECT signal to the caller's terminal equipment, and the terminal equipment at the calling party is thereby allowed to use a B-channel in the INS network. Then, the terminal equipment at the calling party sends an SABM command (X. 25) to the INS network through the B-channel to establish a link between the caller's terminal equipment and the INS network in accordance with the HDLC or LAPB procedure. Responding to the SABM command, the INS network returns a UA response signal to the caller's terminal equipment to acknowledge the receipt and acceptance of the SABM command. Receiving the UA response, the caller's terminal equipment sends a Calling Request packet (X. 25) to the INS network.

Upon receipt of the Calling Request packet, the INS network sends a SETUP signal to the terminal equipment at the called party, wherein a transfer mode element is set to "packet mode". Since the receiver's terminal equipment is not able to carry out data communication by the packet switched mode, the receiver's terminal equipment returns a DISCONNECT signal to the INS network, where the DISCONNECT signal includes a cause information element which indicates "Incompatible Destination". Receiving the DISCONNECT message, the INS network sends a Clear Indication packet to the caller's terminal equipment. In response to the Clear Indication packet, the caller's terminal equipment returns a Clear Confirmation packet (X. 25) to the INS network. Receiving the Clear Confirmation packet, the INS network sends a RELEASE message to the receiver's terminal equipment, which terminal equipment returns a RELEASE COMPLETE message to the INS network. On the other hand, the caller's terminal equipment sends a Disconnect frame (DISC) to the INS network, and then, the INS network returns a UA response signal to the caller's terminal equipment. Thus, control is shifted from the B-channel to the D-channel, and the caller's terminal equipment sends a DISCONNECT signal to the INS network. Then, the INS network returns a RELEASE signal to the caller's terminal equipment and, responding to the RELEASE message, the caller's terminal equipment returns a RELEASE COMPLETE message to the INS network to complete data communication by the packet mode.

At this point, the caller's terminal equipment tries to initiate data transfer by the circuit switched mode, i.e., the caller's terminal equipment sends a SETUP signal which includes a transfer mode element set to "circuit mode" to the INS network. Receiving the SETUP message, the INS network sends a SETUP message including the transfer mode element set to "circuit mode" to the receiver's terminal equipment. In response to the SETUP message, the receiver's terminal equipment returns a CONNECT signal to the INS network. Upon receipt of the CONNECT signal, the INS network sends it on to the caller's terminal equipment and a CONNECT ACKNOWLEDGE signal is sent to the terminal equipment at the called party. Thus data transfer may be carried out between the caller's terminal equipment and the receiver's terminal equipment through the INS network.

When the above data transfer is complete, the terminal equipment at the calling party sends a DISCONNECT signal to the INS network, and the INS network sends a DISCONNECT message to the receiver's terminal equipment. In response to the DISCONNECT signal, the receiver's terminal equipment returns a RELEASE signal to the INS network, and the INS network sends a RELEASE signal to the caller's terminal equipment. In response to the RELEASE signal, the caller's terminal equipment at the calling party returns a RELEASE COMPLETE signal to the INS network, and the INS network sends RELEASE COMPLETE signal to the receiver's terminal equipment to complete data communication.

In the sequence of Fig. 9, when a SETUP signal indicating the packet switched mode is sent to the receiver's terminal equipment, where the terminal equipment at the called party is not able to carry out data communication by the packet switching mode, the terminal equipment at the called party does not elicit any response. When no response is obtained from the receiver's terminal equipment for a predetermined length of time, the INS network sends a Clear Indication packet to the caller's terminal equipment. Upon receipt of the Clear Indication packet, the caller's terminal equipment returns a Clear Confirmation packet to the INS network. Thereafter, the rest of the sequence is the same as the sequence of Fig. 8.

Although not shown, the terminal equipment according to the present embodiment, comprises an MPU, ROM, RAM, and a communication LSI, which are generally available, and all the above operations are carried out under software control.

Furthermore, while the present invention has been described in terms of its use with the INS network in Japan, it is by no means restricted to this use, since the INS network is in accordance with the CCITT recommendation. All the features explained above are applicable to all ISDN networks in accordance with CCITT recommendation. In addition, the concept of the invention is applicable to all ISDN networks incorporating both circuit switched and packet switched modes, and may be applied to such with only minor modifications to the handshake protocol.

## Claims

1. ISDN terminal equipment comprising:
a manual starting means;
an unsuccessful try detecting means for detecting that data communication has not been successfully begun by the operation of said manual starting means; and
a retrying means; and
characterised by
a circuit switched communication means operable to carry out data communication in accordance with a circuit-switched procedure,
a packet switched communication means operable to carry out data communication in accordance with a packet switched communication procedure,
wherein either one of the said communication means is predeterminable as a first communication means in response to a manual start input, thereby providing two alternative modes of operation,
the manual starting means is operable to begin the setting up of a call, when receiving said manual start input, using the predetermined first communication means, and
the retrying means is operable to begin the operation of setting up a call using the other of said communication means when said unsuccessful try detecting means detects that the data communication has not been successfully begun by the operation of said manual starting means.

2. ISDN terminal equipment according to claim 1, wherein said unsuccessful try detecting means is arranged to determine that data communication has not been successfully begun by the operation of said manual starting means, by detecting a predetermined response state, to said operation of setting up, from the network.

3. ISDN terminal equipment according to claim 2, wherein said predetermined response state is a state of receiving a DISCONNECT signal, where the DISCONNECT signal includes a cause information element indicating "No Route to Destination", "No User Responding", or"Incompatible Destination", when said manual starting means starts the operation of setting up a call using said circuit switched communication means.

4. ISDN terminal equipment according to claim 2, wherein said predetermined response state is a state of receiving a DISCONNECT signal, where the DISCONNECT signal includes a cause information element indicating "No Route to Destination", "No User Responding", or "Incompatible Destination", when said manual starting means starts the operation of setting up a call using said packet switched communication means.

## Patentansprüche

1. ISDN-Endgerät, enthaltend:
ein manuelles Startmittel,
Detektionsmittel für einen erfolglosen Versuch zum Detektieren, daß eine Datenkommunikation durch die Betätigung des manuellen Startmittels nicht erfolgreich begonnen wurde, und
ein Wiederholungsmittel, und
gekennzeichnet durch
leitungsvermittelte Kommunikationsmittel, die betreibbar sind, um eine Datenkommunikation gemäß einer leitungsvermittelten Prozedur auszuführen,
paketvermittelte Kommunikationsmittel, die betreibbar sind, um eine Datenkommunikation gemäß einer paketvermittelten Kommunikationsprozedur auszuführen,
wobei jedes der Kommunikationsmittel als eine erste Kommunikationsmittelantwort auf eine manuelle Starteingabe vorgebbar ist, wodurch zwei alternative Betriebsmodi bereitgestellt sind,
das manuelle Startmittel betreibbar ist, um das Einstellen eines Rufs zu beginnen, wenn die manuelle Starteingabe empfangen wird, durch Verwendung der ersten vorgegebenen Kommunikationsmittel, und
das Wiederholungsmittel betreibbar ist, um das Einstellen eines Rufs unter Verwendung des anderen der Kommunikationsmittel zu beginnen, wenn die Detektionsmittel für einen erfolglosen Versuch detektieren, daß die Datenkommunikation durch den Betrieb ders manuellen Startmittels nicht erfolgreich begonnen wurde.

2. ISDN-Endgerät nach Anspruch 1, bei dem die Detektionsmittel für einen erfolglosen Versuch angeordnet sind, um zu bestimmen, daß eine Datenkommunikation durch die Betätigung der manuellen Startmittel nicht erfolgreich begonnen wurde, durch Detektieren eines vorgegebenen Antwort zustandes auf den Einstellbetrieb von dem Netz.

3. ISDN-Endgerät nach Anspruch 2, bei dem der vorgegebene Antwort zustand cin Zustand eines Empfangs eines UNTERBRECHE-Signals ist, wobei das UNTERBRECHE-Signal ein Ursacheninformationselement enthält, das "Kein Übertragungsweg zum Ziel", "Keine Anwenderantwort" oder "Inkompatibles Ziel" angibt, wenn die manuellen Startmittel den Betrieb, einen Ruf einzustellen, der die leitungsvermittelten Kommunikationsmittel verwendet, beginnen.

4. ISDN-Endgerät nach Anspruch 2, bei dem der vorgegebene Antwortzustand ein Zustand eines Empfangs eines UNTERBRECHE-Signals ist, wobei das UNTERBRECHE-Signal ein Ursacheninformationselement enthält, das "Kein Übertragungsweg zum Ziel", "Keine Anwenderantwort" oder "Inkompatibles Ziel" angibt, wenn die manuellen Startmittel den Betrieb, einen Ruf einzustellen, der die paketvermittelten Kommunikationsmittel verwendet, beginnen.

## Revendications

1. Terminal RNIS comportant :
des moyens de départ manuels;
des moyens de détection de tentative infructueuse pour détecter que la communication de données n'a pas été couronnée de succès par le fonctionnement des moyens de départ manuels; et
des moyens de réessai; et caractérisé par
des moyens de communication commutés en circuit actionnables pour effectuer une communication de données selon une procédure commutée en circuit,
des moyens de communication commutés en paquets actionnables pour établir une communication de données selon une procédure de communication commutée en paquets,
dans lequel, soit l'un desdits moyens de communication est prédéterminé en tant que premiers moyens de communication en réponse à un signal d'entrée manuel, proposant ainsi deux modes alternatifs de fonctionnement,
les moyens de départ manuels sont actionnables pour commencer l'établissement d'une communication, lors de la réception d'un signal d'entrée manuel, en utilisant les premiers moyens de communication prédéterminés, et
les moyens de réessai sont actionnables pour établir le fonctionnement de l'établissement d'une communication en utilisant l'autre desdits moyens de communication lorsque lesdits moyens de détection de tentative infructueuse détectent que la communication de données n'a pas été réussie par le fonctionnement desdits moyens de départ manuels.

2. Terminal RNIS selon la revendication 1, dans lequel lesdits moyens de détection de tentative infructueutueuse sont agencés pour déterminer qu'une communication de données n'a pas été réussie par le fonctionnement desdits moyens de départ manuels, en détectant un état de réponse prédéterminé, à ladite opération d'établissement, provenant du réseau.

3. Terminal RNIS selon la revendication 2, dans lequel ledit état de réponse prédéterminé est un état de réception d'un signal DECONNEXION, où le signal DECONNEXION comprend un élément d'information de cause indiquant "Aucun itinéraire vers la destination", "Pas de réponse du correspondant", ou "Destination incompatible", lorsque lesdits moyens de départ manuels débutent l'opération d'établissement d'une communication en utilisant lesdits moyens de communication commutés en circuit.

4. Terminal RNIS selon la revendication 2, dans lequel ledit état de réponse prédéterminé est un état de réception d'un signal DECONNEXION, où le signal DECONNEXION comprend un élément d'information de cause indiquant "Aucun itinéraire vers la destination", "Aucune réponse du correspondant", ou "Destination incompatible", lorsque lesdits moyens de départ manuels débutent l'opération d'établissement d'une communication en utilisant lesdits moyens de communication commutés en paquets.
